# EUROPEAN PATENT APPLICATION

(11) **EP 3 670 482 A1**
(43) Date of publication of application: **24.06.2020**
(21) Application number: 18215328.8
(22) Date of filing: 21.12.2018
(51) Int. Cl.: C05D 3/00, C05D 3/02

(54) **PROCESS FOR THE PRODUCTION OF A LIME FERTILIZER**

(71) Applicant: SOLVAY SA, 1120 Brussels (BE)
(72) Inventor: REH, Uwe, 39218 Schönebeck (DE); MOERL, Lothar, 39291 Hohenwarthe (DE); BEHNS, Wolfgang, 39291 Hohenwarthe (DE); HAIDA, Hartmut, 39116 Magdeburg (DE); KILLMANN, Juergen, 06449 Aschersleben (DE)
(74) Representative: Vande Gucht, Anne

(57) **Abstract**

The invention pertains to a process for the production of a lime fertilizer using by-products of soda ash product, including lime slurry, lime pellets and lime powder.

## Description

### BACKGROUND

Soda ash, also known as sodium carbonate, can be obtained either from synthetic routes or from natural brines and deposits containing soda ash. Today, the dominant synthetic route for the production of soda ash is the Solvay process or its variations. The continued success of the Solvay process is also due to the ready availability of the raw materials, salt and limestone. The Solvay process for the production of soda ash could be summarized by the theoretical global equation involving the two main components: sodium chloride and calcium carbonate.

2NaCl + CaCO₃ → Na₂CO₃ + CaCl₂

In practice this direct way is not possible and it needs the participation of other substances and various different process steps to get the final product, soda ash. First reactions occur in salt solution (brine). First of all, ammonia is absorbed (1) and then, the ammoniated brine is reacted with carbon dioxide to form successive intermediate compounds: ammonium carbonate (2) then ammonium bicarbonate (3). By continuing carbon dioxide injection and cooling the solution, precipitation of sodium bicarbonate is achieved and ammonium chloride is formed (4). Chemical reactions relative to different steps of the process are written below:

**NaCl + H₂O + NH₃ ↔ NaCl + NH₄OH** (1)

**2 NH₄OH + CO₂ ↔ (NH₄)₂CO₃ + H₂O** (2)

**(NH₄)₂CO₃ + CO₂ + H₂O ↔ 2 NH₄HCO₃** (3)

**2 NH₄HCO₃ + 2 NaCl ↔ 2 NaHCO₃↓ + 2 NH₄Cl** (4)

Sodium bicarbonate crystals are separated from the mother liquor by filtration, then sodium bicarbonate is decomposed thermally into sodium carbonate, water and carbon dioxide (5).

**2 NaHCO₃ → Na₂CO₃ + H₂O^{↗} + CO₂^{↗}** (5)

CO₂ is recovered in the carbonation step (see equations 2 and 3 above). Mother liquor is treated to recover ammonia. The ammonium chloride filtrate (4) is reacted with alkali, generally milk of lime (6), followed by steam stripping to recover free gaseous ammonia:

**2 HH₄Cl + Ca(OH)₂ → Cacl₂ + 2 NH₃^{↗} + 2 H₂O** (6)

NH3 is recycled to the absorption step (see equation 1 above). Carbon dioxide and calcium hydroxide originate from limestone calcination (7) followed by calcium oxide hydration (8).

**CaCO₃ → CaO + CO₂^{↗}** (7)

**CaO + H₂O → Ca(OH)₂** (8)

Brine (NaCl) has to be treated before the input in the process to remove impurities: calcium and magnesium. If not removed they would react with alkali and carbon dioxide to produce insoluble salts contributing to scale formation inside equipment. Brine purification reactions are described in the following equations:

**Ca²⁺ + CO₃²⁻ → CaCO₃↓** (9)

**Mg²⁺ + 2 OH⁻ → Mg(OH)₂↓** (10)

Sodium carbonate formed (equation 5) is called "light soda ash" because its bulk density is approximately 0.5 t/m3. A subsequent operation called densification enables this value to be doubled by crystallisation into sodium monohydrate, by adding water (equation 11) then followed by drying (equation 12). Final product is "dense soda".

**Na₂CO₃ + H₂O --------> Na₂CO₃.H₂O** (11)

**Na₂CO₃.H₂O --------> Na₂CO₃ + H₂O^{↗}** (12)

One of the major achievements of the Solvay process is the high efficiency of the ammonia recycle loop. The purpose of this important process "distillation" is to recover ammonia from the ammonium chloride containing mother liquors recovered from the bicarbonate filters/centrifuges. The liquid phase coming out from the distillation unit contains: unreacted sodium chloride (reaction (4) above is not complete due to thermodynamic and kinetic limitations), calcium chloride resulting from reaction with NH₄Cl, solid matter that is derived primarily from the original limestone and finally, small quantity in excess of lime that can ensure a total decomposition of NH₄Cl. This liquid called "DS-liquid" or "Distiller Blow Off DBO" is usually treated in different ways depending on the particular site and processes used.

It is an object of the present invention to further process the distiller waste for a reasonable purpose.

DD 62578 A1 describes a process for removing waste obtained from the production of soda ash for producing lime fertilizers. The process disclosed in DD 62578 A1 comprises mechanically processing residual components from the Solvay process and mixing them with additional components such as gypsum.

DD 233554 A1 describes a process for the production of granulated lime containing fertilizers form waste products.

DD 297391 A5 discloses the nitrogen fertilizer on the basis of lime nitrogen.

DE 2552899 C3 discloses a process for further using waste products from the Solvay process for producing a lime fertilizer.

DE 3600400 C2 discloses a process for conditioning a lime containing slurry, which comprises drying the slurry in a fluidized bed apparatus.

DE 000019841500 A1 discloses the use of a lime slurry from soda ash production for preparing a composition comprising micro-nutrients.

The inventors of this application found that a lime fertilizer with advantageous properties can be prepared by desalting the distiller waste from soda ash production, and then mixing the desalted composition with lime pellets or lime dust obtained from soda ash production.

### SUMMARY OF THE INVENTION

The present invention therefore relates to the subject matter defined in the following items (1) to (28):
1. A process for the production of a lime fertilizer, comprising
   (a) providing an aqueous lime slurry comprising calcium chloride,
   (b) depleting salts in said lime slurry comprising calcium chloride so as to obtain a salt-depleted lime slurry,
   (c) adding lime powder and/or lime pellets to the salt-depleted lime slurry to obtain a wet mass and optionally adding water,
   (d) mixing and granulating the wet mass to obtain a wet granulate, and
   (e) optionally drying the wet granulate to obtain a dry granulate.
2. The process of item 1, wherein said lime slurry provided in step (a) is made of solid matter suspended in an aqueous solution, and said solid matter comprises (as wt-%):
   - at least 1% and at most 70% Ca(OH)₂,
   - at least 5% and at most 60% CaCO₃,
   - at least 1% and at most 40% CaSO₄,
   - at most 15% Mg(OH)₂,
   - at most 40%, of other minerals comprising silica,
   and so that the sum of above solids components is 100%.
3. The process of item 2, wherein said solid matter comprises at least 0.1 wt% of CaCl₂ and at most 15, preferably at most 10, more preferably at most 5, even more preferably at most 3 wt% of CaCl₂.
4. The process of item 2 or 3, wherein said solid matter comprises at most 30 wt.-% of other minerals comprising silica.
5. The process of item 3, wherein said solid matter comprises at most 20 wt.-% of other minerals comprising silica and/or ettringite.
6. The process of any one of items 2 to 5, wherein said other minerals comprising silica are selected from the group consisting of clays, iron silicate, aluminum silicate, calcium silicate, and combinations thereof.
7. The process of any one of items 2 to 6, wherein the solid matter suspended in the aqueous solution has a d₉₀ value of at most 300 µm.
8. The process of any one of items 2 to 7, wherein the solid matter suspended in the aqueous solution has a d₉₀ value of of at most 200 µm.
9. The process of any one of items 2 to 8, wherein the solid matter suspended in the aqueous solution has a d₉₀ value of of at most 120 µm.
10. The process according to any one of the preceding items, wherein said lime slurry provided in step (a) comprises distiller waste resulting from the ammonia regeneration step in a process for producing soda ash according to the Solvay process.
11. The process according to any one of the preceding items, wherein said lime powder and lime pieces are by-products from a process for producing soda according to the Solvay process such as: lime powder recovered from de-dusting during lime grinding, or lime pieces taken out from lime grinding before production of milk of lime.
12. The process according to any one of the preceding items, wherein step (b) comprises washing the lime slurry with water and optionally dewatering.
13. The process according to any one of the preceding items, wherein the salt-depleted lime slurry obtained in step (b) has a solid content from 20 to 50 wt-%.
14. The process of any one of the preceding items, wherein the lime powder has a particle size distribution characterized by a d₅₀ value of from 0.01 mm to 0.05 mm, and/or the lime pellets have a particle size distribution characterized by a d₅₀ value of from 0.2 to 5 mm.
15. The process of any one of the preceding items, wherein the wet granulate obtained in step (d) has a water content of at least 12 wt.-%.
16. The process of any one of the preceding items, wherein the wet granulate obtained in step (d) has a water content of at most 40 wt.-%.
17. The process of any one of the preceding items, wherein the wet granulate obtained in step (d) has a water content of at most 30 wt.-%.
18. The process of any one of the preceding items, wherein the wet granulate obtained in step (d) has a water content of at most 25 wt.-%.
19. The process of any one of the preceding items, wherein the dry granulate obtained in step (e) has a water content of from 1 to 10 wt.-%.
20. The process of any one of the preceding items, wherein the dry granulate obtained in step (e) has a particle size distribution characterized by a d₅₀ value of from 1 to 3 mm.
21. A lime fertilizer obtainable by a process of any one of the preceding items comprising at least 15 wt-% of lime expressed as Ca(OH)₂.
22. A lime fertilizer obtainable by a process of any one of items 1 to 19, comprising at least 20 wt-% of lime expressed as Ca(OH)₂.
23. A lime fertilizer obtainable by a process of any one of items 1 to 19, comprising at least 25 wt-% of lime expressed as Ca(OH)₂.
24. A lime fertilizer obtainable by a process of any one of items 1 to 19, comprising at least 30 wt-% of lime expressed as Ca(OH)₂.
25. The lime fertilizer of any one of items 20 to 23, comprising a granulate as defined in any one of items 1 to 20.
26. The lime fertilizer of any one of items 21 to 25, wherein said granulate is the dry granulate.
27. The use of a lime slurry comprising calcium chloride, a lime powder and lime pellets for preparing a lime fertilizer.
28. The use of item 27, wherein said lime slurry comprising calcium chloride, said lime powder and said lime pellets are obtained from a process for producing soda ash according to the Solvay process.

### DRAWINGS

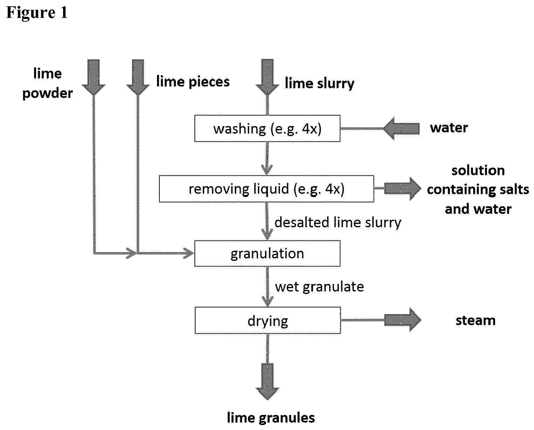

Figure 1 shows a diagram depicting a preferred embodiment of the process of the present invention.
Figure 2A and 2B show the mixing and crushing of lime components using a crusher bucket of an excavator (example 4).

### DETAILED DESCRIPTION

The present invention is directed at a process for the production of a lime fertilizer from by-products obtained during the Solvay process for the production of soda ash. The process comprises the use of at least two components, (i) lime slurry and (ii) lime powder or lime pellets. A particular embodiment of the present invention comprises the uses of three components, lime slurry, lime powder and lime pellets. The process of the invention comprises the following steps:
(a) providing an aqueous lime slurry comprising calcium chloride,
(b) depleting salts in said lime slurry comprising calcium chloride so as to obtain a salt-depleted lime slurry,
(c) adding lime powder and/or lime pellets to the salt-depleted lime slurry to obtain a wet mass and optionally adding water,
(d) mixing and granulating the wet mass to obtain a wet granulate, and
(e) optionally drying the wet granulate to obtain a dry granulate.

The lime slurry provided in step (a) is typically obtained from the distiller waste resulting from the ammonia regeneration step in a process for producing soda ash according to the Solvay process. The lime slurry provided in step (a) is made of solid matter suspended in aqueous solution. The solid matter preferably comprises:
- at least 1% and at most 70% lime expressed as Ca(OH)₂,
- at least 5% and at most 60% calcium carbonate expressed as CaCO₃,
- at least 1% and at most 40% calcium sulfate expressed as CaSO₄,
- at most 15% magnesium hydroxide expressed as Mg(OH)₂,
- at most 40%, preferably at most 30% or at most 20% of other minerals comprising silica, such as: silica, clays, iron silicate, aluminum silicate, ettringite, and mixtures thereof,
and so that the sum of above solid components is 100%.

More preferably, the solids comprise at least 2, or at least 5, or at least 10, or at least 15 wt.-% of Ca(OH)₂. It is further preferred that the solids comprise at most 65, or at most 60, or at most 55 wt.-% of Ca(OH)₂. In other embodiments, the solids comprise from 2 to 70, or from 5 to 65, or from 10 to 60, or from 15 to 55 wt.-% of Ca(OH)₂.

In further preferred embodiments, the solids comprise at least 5, or at least 10, or at least 15, or at least 25 wt.-% of CaCO₃. In another embodiment, the solids comprise at most 60, or at most 45, or at most 40, or at most 35 wt.-% of CaCO₃. In other embodiments, the solids comprise from 10 to 45, or from 15 to 40, or from 25 to 35 wt.-% of CaCO₃.

Preferably, the amount of CaSO₄ in the solids is at least 2, or at least 3, or at least 4 wt.-%. In another embodiment, the amount of CaSO₄ in the solids is at most 35, or at most 30 wt.-%. In other embodiments, the amount of CaSO₄ in the solids ranges from 2 to 40, or from 3 to 35, or from 4 to 30 wt.-% expressed as weight of CaSO₄ reported to the total weight of the solid. The CaSO₄ mineral present in the solid is generally either anhydrous calcium sulfate (CaSO₄), or hydrated calcium sulfate species such as: calcium sulfate hemihydrate (CaSO₄.0.5 H₂O), or calcium sulfate dihydrate (CaSO₄.2H₂O).

The amount of calcium chloride in the solids is typically in the range from about 1 wt.-% to about 10 wt.-%.

The solids typically comprise other minerals, such as silica, clays, iron silicate, aluminum silicate, ethringite and combinations thereof.

The amount of these other minerals comprising silica is at most 40 wt.-%, preferably at most 30 wt.-%, most preferably at most 20 wt.-%.

The solid matter suspended in the aqueous solution preferably has a particles size distribution characterized by a d₉₀ value of at most 300 µm. More preferably, the d₉₀ value is at most 200 µm, most preferably, the d₉₀ value is at most 120 µm.

The d₉₀ value can be determined as known in the art, for example according to the standard techniques defined in ISO 13320:2009.

The lime slurry used in the process of the invention is typically washed at least once with water in order to at least partially remove salts from the lime slurry. This can be done by using a decanter, known to one of ordinary skill. Alternatively, the washing and desalting can be carried out in a mixer or reactor, by adding water, mixing, and removing the liquid or supernatant. If this is repeated several times an effective depletion of salts is achieved. The washing step can be carried out at least once, or at least twice, or at least three times, or at least four times, or at least five times. The washing step may be carried out 1 to 10 times, or 2 to 9 times, or 3 to 8 times, or 4 to 7 times, e.g. 4, 5 or 6-times. Typically, the washing step is carried out until the concentration of chlorides (mainly in calcium chloride and sodium chloride species) in the solids of the lime slurry is less than 15%, or less than 10%, or less than 5%, or less than 3%, or less than 1%, or less than 0.5%. Preferably, the washing step is carried out until the concentration of chlorides in the solids of the lime slurry is less than 5 wt.-%, more preferably less than 3 wt.-%, even more preferably less than 1 wt.-%. Indeed, for agriculture fertilizer to be polyvalent to main crop species, the above limited amounts chlorides (as for instance sodium chloride or calcium chloride species) are particularly preferred.

The solid content of the lime slurry after the desalting step is typically from 20 to 50 wt.-%.

In one embodiment of the invention, the lime powder is added to the salt-depleted lime slurry in the next step. The lime powder is usually obtained from the de-dusting during lime grinding in the Solvay process. The lime powder has usually a particle size distribution characterized by the d₅₀ value ranging from about 0.01 mm to 0.05 mm. The lime powder preferably has a residual moisture of less than 10 wt.-%, more preferably of less than 5 wt.-%, most preferably of less than 3 wt.-%.

In an alternative embodiment, lime pieces are added to the salt-depleted lime slurry. The lime pellets are usually obtained from the lime grinding, which takes place before production of milk of lime in the Solvay process. The lime pieces typically have a particle size distribution characterized by a d₅₀ value ranging from about 0.2 to 5 mm.

In a preferred embodiment, both lime powder and lime pieces are added to the salt-depleted lime slurry. The lime powder and the lime pieces can be added to the salt depleted lime slurry simultaneously or sequentially. The order of the addition is not particularly limited.

After addition of the lime powder and/or the lime pellets, the composition is usually mixed to obtain a wet mass. The mixing can be carried out in a mixer or reactor device, e.g. a reactor of the company Lödige. In a particular embodiment, water is added before, during, or after the mixing. The wet granulate obtained after the mixing usually has a water content of at least 12 wt.-%, or at least 15 wt.-%. Water is added if this is necessary in order to achieve the minimum water content of the resulting wet granulate.

In other embodiments, the wet granulate obtained in step (d) has a water content of at most 50 wt.-%, or at most 30 wt.-%, or at most 25 wt.-%. In other embodiments, the wet granulate obtained in step (d) has a water content ranging from 12 wt.-% to 40 wt.-%, or from 15 wt.-% to 30 wt.-%, or from 18 wt.-% to 25 wt.-%.

The wet granulate is then optionally subjected to a drying step in order to obtain a dry granulate. The drying can be carried out by exposing the wet granulate to air. It is also possible to accelerate the drying by applying heat to the wet granulate. Preferably, the drying is carried out in a fluidized bed device. Such devices are known to the skilled person.

The dry granulate preferably has a water content ranging from about 1 to about 10 wt.-%. Preferably, the water content of the dry granulate is from 2 to 8 wt.-%, or from 3 to 6 wt.-%.

The dry granulate typically has a particle size distribution characterized by a d₅₀ value from about 1 to about 3 mm.

Further aspects of the present invention include a lime fertilizer obtainable by a process described herein, wherein said lime fertilizer comprises at least 15 wt.-% of lime expressed as calcium hydroxide. Preferably, the lime fertilizer comprises at least 20 wt.-%, or at least 25 wt.-%, or at least 30 wt.-% of lime expressed as calcium hydroxide.

Yet another aspect of the present invention is a lime fertilizer comprising a granulate as defined herein above. The granulate is preferably the dry granulate described herein.

Yet another aspect of the present invention is the use of a lime slurry comprising calcium chloride, of a lime powder of lime pellet for preparing a lime fertilizer. In preferred embodiments these components are obtained from a process for producing soda ash according to the Solvay process.

### EXAMPLES

### Example 1

Lime slurry with calcium chloride from the soda ash production was washed four times to reduce the concentration of CaCl₂ to less than 2 wt.-%. Thereafter the suspension has been dewatered in a centrifuge to a lime slurry (mud) with about 40% dry matter.

The washed and dewatered lime slurry, lime pieces and lime powder, all obtained as by-products from a plant for the production of soda ash according to the Solvay process, were used to prepare lime granules. The lime slurry was introduced into a laboratory ploughshare mixer LM 20 and washed four times with water. Lime pieces and lime pellets were added to the salt-depleted slurry, mixed and granulated. The obtained granules had an average particle size ranging from 2 to 3 mm.

After this lab-scale production had been successfully completed, an up-scaled format was carried out using industrial equipment, as described in Example 2.

### Example 2

It should be shown in this experiment that 20 tons of granulate can be produced by the method of the invention. Accordingly, it should be demonstrated that this process can be carried out at an industrial scale.

The following by-products from soda ash production were used:
(a) Lime pieces, obtained from lime grinding before production milk of lime.
(b) Lime powder obtained from the de-dusting step during lime grinding.
(c) Distiller waste from the ammonia regeneration step ("Oelde I") or slurry from ponds where the distiller waste had been deposited at the production site ("Oelde II"). Oelde I is lime slurry produced directly from the distiller waste water washed in a mixer and separated in a horizontal decanter; dry matter max. 60 wt.-% after technical dewatering. Oelde II is settled lime slurry from the lime ponds of the industrial settling ponds; dry matter max. 35 wt-%. Oelde I and Oelde II comprise the same compounds and minerals. Composition of the dry matter of Oelde I and Oelde II: 30 - 40 wt-% CaO; 1 - 5wt-% Ca(OH)₂; 5 - 10 wt-% R₂O₃ (Al₂O₃+Fe₂O₃); 1 - 5 wt-% MgO; 2 - 4 wt-% SO₄; 15 - 25 wt-% CO₂; 10 - 15wt-% SiO₂; 2 - 4 wt-% Cl.

The **lime pieces** were obtained from Solvay Chemicals at the plant in Bernburg, Germany. They were sieved with a sieving machine (mesh size 3 mm). The moisture content of the sieved granules was 20.8 wt.-%. The particle size distribution after sieving was characterized by d₅₀ values in the range from 0.5 to 2.5 mm.

The **lime powder** was also obtained from Solvay Chemicals in Bernburg and was provided in flexible intermediate bulk containers, referred to as "BigBags" hereinafter. The moisture content of the lime powder was in the range from 1.5 to 2 wt.-%. The particles size distribution was characterized by d₅₀ value in the range from 0.027 to 0.031 mm.

The **lime slurry** was first subjected to a washing step and a concentration step. The washing was carried out in order to remove the salt in the lime slurry, particularly the calcium chloride. To do so, the plough share mixer FKM 300 D of the company Lödige Maschinenbau GmbH was used. The lime slurry was transferred into the mixer, water was added and the liquid phase was then removed using the decanter CA 225-00-33 obtained from GEA Westfalia Separator Group in the Technikum Oelde. The lime slurry has been pumped from the mixer to the decanter with a defined quantity. This decanter was equipped with a standard screw and a regulating disk 160. The feeding tube had a length of 515 mm. The decanter was operated with a drum speed of 4,750 min⁻¹ and a screw speed of 8 to 13 min⁻¹. An acceptable result was obtained at a throughput of about 800 liter/h. The clear phase at this throughput rate had a solid content of 210 mg/liter. The clear phase was discarded and the slurry was packaged into barrels, in order to carry out the granulation experiments. The drying loss of the washed and concentrated slurry (average value from 6 samples) was as follows.

**Table 1**

| | Oelde I | Oelde II |
|---|---|---|
| Average drying loss in wt.-% | 63.85 | 60.55 |
| Average solid content in wt.-% | 36.15 | 39.45 |

As mentioned above, slurry from the deposition pond ("Haldenschlamm" or "Kalkteich") was used as an alternative source for the lime slurry. This slurry was also provided by Solvay Chemicals Bernburg. It was taken from the upper layers of the deposits after a natural dewatering. The residual moisture was 63.85 wt.-%, corresponding to a solid content of 36.15 wt.-%.

The mixing and granulation of the above mentioned components was carried out batch-wise in the Lödige ploughshare mixer FKM 300. For each batch the following amounts were put into the mixer:
50 kg lime pieces
40 kg lime powder
60 kg of washed and concentrated lime slurry

The components were mixed at a speed of 90 min⁻¹. The blades were operated at a speed of 3,000 min⁻¹. After the mixing, the produced granulate was taken from the mixer and air-dried on the floor of a hall.

In a particular experiment, only two components were used, namely lime slurry and lime powder.

The total amounts of the components and produced granulates were as follows:

**Table 2**

| | |
|---|---|
| Lime slurry (Oelde I and Oelde II) | 441 kg |
| Deposited slurry from pond | 5,634 kg |
| Lime pieces | 1,322 kg |
| Lime powder | 12,540 kg |
| Total (theoretical yield of wet granulate) | 19,937 kg |

Up to 20 batches per day were produced. Assuming an average moisture content of 21 %, the theoretical dry mass of the produced granulates would be 15,750 kg.

The produced granulates were air dried and then filled into BigBags. The total mass of the BigBags measured after filling was 17,450 Kg.

The residual moisture of the wet granulates obtained from the mixture was about 20 to 21 wt.-%. The average moisture content of the air-dried granulates was about 4 wt.-%, the individual batches ranged from about 2 to about 7 wt.-%.

The particle size distribution of the granulates yielded a d₅₀ value of about 2 mm. The sphericity SPHT3 of the dried granulates was at least 0.8, i.e. the form of the particles was close to sphericity. When commercially producing the granulate, the drying in a fluidized bed would appear more suitable. This would allow further reducing the residual moisture of the dried granulates close to 0 % water.

The lime granulates obtained from different batches were analyzed after drying, and the following results were obtained:

**Table 3**

| **Parameter** | **Unit** | **value** | **remark** |
|---|---|---|---|
| drying loss | % | 3.6 | |
| CaO-active | % | 3.0 | |
| CaO | % | 41.2 | based on the dry matter |
| MgO | % | 2.31 | |
| SO₄ | % | 1.33 | |
| PO₄ | % | 0.065 | |
| K | % | 0.26 | |
| Cu | % | 0.001 | |
| Ni | % | 0.002 | |
| Zn | % | 0.002 | |
| Cd | % | <0.0001 | |
| Pb | % | <0.001 | |
| Fe | % | 1.07 | |
| Al | % | 1.34 | |
| Cr | % | 0.001 | |
| Insolubles | % | 12.6 | |
| Cl | % | 0.52 | |
| CO₂ | % | 29.1 | |
| Ammonium-N | % | <0.07 | |
| pH | - | 11.7 | eluate assay |
| NO₃-N | mg/l | 0.971 | |
| NO₂-N | mg/l | 0.043 | |
| N-total | mg/l | 1.287 | |
| Ammonium-N | mg/l | 0.273 | |

**Table 4**

| **Parameter** | **Unit** | **value** | **remark** |
|---|---|---|---|
| drying loss | % | 3.0 | |
| CaO-active | % | 1.4 | |
| CaO | % | 43.8 | based on dry matter |
| MgO | % | 2.36 | |
| SO₄ | % | 1.54 | |
| PO₄ | % | 0.062 | |
| K | % | 0.35 | |
| Cu | % | 0.001 | |
| Ni | % | 0.002 | |
| Zn | % | 0.002 | |
| Cd | % | <0.0001 | |
| Pb | % | <0.001 | |
| Fe | % | 1.10 | |
| Al | % | 1.40 | |
| Cr | % | 0.002 | |
| Insolubles | % | 14.0 | |
| Cl | % | 0.52 | |
| CO₂ | % | 30.4 | |
| Ammonium-N | % | <0.07 | |
| pH | - | 10.8 | eluate assay |
| NO₃-N | mg/l | 0.637 | |
| NO₂-N | mg/l | 0.065 | |
| N-total | mg/l | 0.887 | |
| Ammonium-N | mg/l | 0.185 | |

**Table 5**

| **Parameter** | **Unit** | **value** | **remark** |
|---|---|---|---|
| drying loss | % | 6.49 | |
| CaO-active | % | 13.2 | |
| CaO | % | 43.2 | based on dry matter |
| MgO | % | 2.56 | |
| SO₄ | % | 1.61 | |
| PO₄ | % | 0.065 | |
| K | % | 0.35 | |
| Cu | % | 0.002 | |
| Ni | % | 0.001 | |
| Zn | % | 0.002 | |
| Cd | % | <0.0001 | |
| Pb | % | <0.001 | |
| Fe | % | 1.16 | |
| Al | % | 1.53 | |
| Cr | % | 0.001 | |
| Insolubles | % | 11.8 | |
| Cl | % | 0.32 | |
| CO₂ | % | 29.2 | |
| pH | - | 11.5 | eluate assay |
| NO₃-N | mg/l | 0.443 | |
| NO₂-N | mg/l | 0.059 | |
| N-total | mg/l | 0.819 | |
| Ammonium-N | mg/l | 0.317 | |

**Table 6**

| **Parameter** | **Unit** | **value** | **remark** |
|---|---|---|---|
| drying loss | % | 16.6 | Drying required |
| CaO-active | % | 1.5 | |
| SiO2 | % | 18.1 | based on dry matter |
| CaO | % | 39.6 | |
| MgO | % | 2.14 | |
| SO₄ | % | 0.83 | |
| PO₄ | % | 0.065 | |
| K | % | 0.28 | |
| Cu | % | 0.011 | |
| Ni | % | <0.0005 | |
| Zn | % | 0.0051 | |
| Cd | % | <0.0002 | |
| Pb | % | <0.0020 | |
| Fe | % | 1.05 | |
| Al | % | 2.21 | |
| Cr | % | 0.0004 | |
| Cl | % | 0.44 | |
| CO₂ | % | 33.9 | |
| pH | - | 11.4 | eluate assay |
| NO₃-N | mg/l | 0.372 | |
| NO₂-N | mg/l | 0.031 | |
| N-ges | mg/l | 0.527 | |
| Ammonium-N | mg/l | 0.124 | |

**Table 7**

| **Parameter** | **Unit** | **value** | **remark** |
|---|---|---|---|
| drying loss | % | 18.2 | Drying required |
| CaO-active | % | 1.4 | |
| SiO2 | % | 12.2 | based on dry matter |
| CaO | % | 39.2 | |
| MgO | % | 2.06 | |
| SO₄ | % | 0.85 | |
| PO₄ | % | 0.053 | |
| K | % | 0.20 | |
| Cu | % | 0.005 | |
| Ni | % | <0.0005 | |
| Zn | % | 0.005 | |
| Cd | % | 0.0006 | |
| Pb | % | <0.0020 | |
| Fe | % | 1.0 | |
| Al | % | 2.17 | |
| Cr | % | 0.0003 | |
| Cl | % | 0.22 | |
| CO₂ | % | 34.3 | |
| pH | - | 11.4 | eluate assay |
| NO₃-N | mg/l | 0.645 | |
| NO₂-N | mg/l | 0.029 | |
| N-ges | mg/l | 1.132 | |
| Ammonium-N | mg/l | 0.458 | |

The experiments carried out demonstrate that the waste components obtained during the Solvay process for the production of soda ash can be used for producing granulates with properties which make them easy to store and handle. In particular, the particle size and the moistures obtained ensure good flowability and transportability. Chemical analysis showed that the granulate contains valuable micro-nutrients (see tables 3 to 7). As a consequence, the granulate can be used a lime fertilizer. After initial experiments had shown the general feasibility of this approach, it was further shown that also the production of 20 tons of granulate can be performed.

### Example3 :

### Field trial

The granulate obtained in example 2 was distributed on soil. The area was categorized into five different sections, which were applied with 0, 130, 190, 240 and 290 tons of lime fertilizer per hectar, respectively. The application of the lime fertilizer did not adversely affect the pH value of the soil. Further, the use of the lime fertilizer did not negatively affect the growth of the corn.

It was therefore concluded that the granulate is useful as a lime fertilizer in agricultural applications.

### Example 4

### Large scale test (1,000 tons of lime fertilizer)

The production of the lime fertilizer was based on the by-products lime slurry, cyclone dust (lime powder) and lime pieces (unburned limestone grid). A ratio of 50/40/10 mass% was chosen for the large scale test.

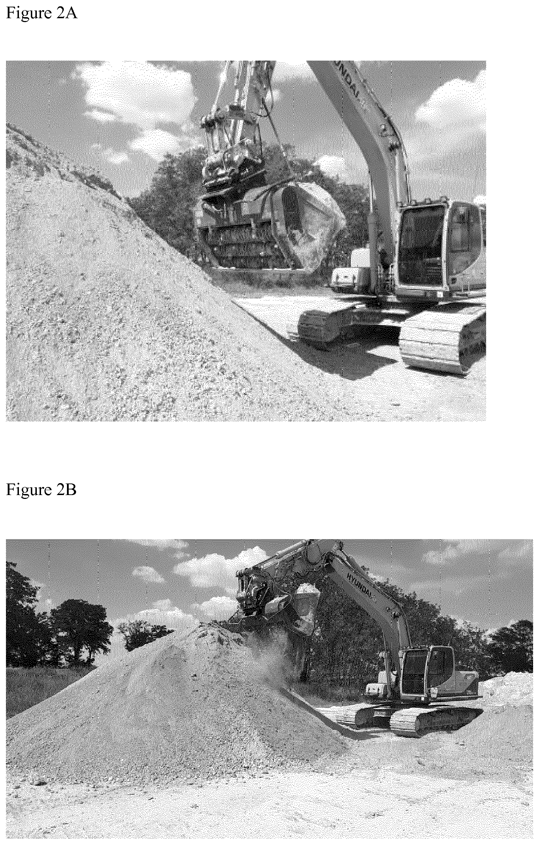

In order to produce a homogeneous blend the individual components were stacked layer by layer with an excavator or wheel loader. After that the material of this storage was dug off with a crusher bucket for excavator or loader. The lime components were mixed and crushed during the transport through the bucket (see Fig. 2A and 2B). Particles/granulates of undefined size were obtained which can be passed through a sieve with the desired grain size. A temporary storage is possible or the screening can be done directly after the treatment with the crusher bucket. During the large scale test a double screen-deck was used with a screen cut of 5 mm.

The lime fertilizer was analyzed in a laboratory and had the following composition:

**Table 8**

| **Parameter** | **Unit** | **value** | **Remark** |
|---|---|---|---|
| drying loss | % | 23.65 | |
| | | | |

| **Analysis of dry matter:** | | | |
|---|---|---|---|
| **Parameter** | **Unit** | **value** | **Remark** |
| CaO-active | % | 9.5 | causticizing method |
| Calcium | % | 31.2 | ICP |
| Magnesium | % | 1.2 | ICP |
| Sodium | | 0 | ICP |
| SO₄ | % | 1.5 | ICP |
| PO₄ | % | 0 | ICP |
| Potassium | % | 0.2 | ICP |
| Chloride | % | 0.5 | Potentiometry |
| CO₂ | % | 31.2 | Scheibler |
| Insolubles | % | 10.7 | |
| | | | |

| **Analysis of eluate (10% in water):** | | | |
|---|---|---|---|
| pH | - | 11.7 | |
| Cl | mg/l | 460 | Potentiometry |
| NH₄-N | mg/l | 1.21 | |
| NO₃-N | mg/l | 2.34 | |
| NO₂-N | mg/l | 0.09 | |
| N-total | mg/l | 3.64 | |

A field test with 50 tons has been done with a standard fertilizer spreader and the distribution analyzed. The distribution was satisfactory. Optimization should be done to a higher quantity of grain sizes 3 -5 mm and a slight reduction of the moisture.

## Claims

1. A process for the production of a lime fertilizer, comprising
(a) providing an aqueous lime slurry comprising calcium chloride,
(b) depleting salts in said lime slurry comprising calcium chloride so as to obtain a salt-depleted lime slurry,
(c) adding lime powder and/or lime pellets to the salt-depleted lime slurry to obtain a wet mass and optionally adding water,
(d) mixing and granulating the wet mass to obtain a wet granulate, and
(e) optionally drying the wet granulate to obtain a dry granulate.

2. The process of claim 1, wherein said lime slurry provided in step (a) is made of solids suspended in an aqueous solution, and said solids comprise (as wt-%):
- at least 1% and at most 70% lime expressed as Ca(OH)₂,
- at least 5% and at most 60% calcium carbonate expressed as CaCO₃,
- at least 1% and at most 40% calcium sulfate expressed as CaSO₄,
- at most 15% magnesium hydroxide expressed as Mg(OH)₂,
- at most 40%, preferably at most 30% or at most 20% of other minerals comprising silica, such as: silica, clays, iron silicate, aluminum silicate, ettringite, and mixtures thereof,
and so that the sum of above solids components is 100%.

3. The process of claim 2, wherein the solids suspended in the aqueous solution has a d₉₀ value of at most 300 µm, preferably of at most 200 µm, more preferably of at most 120 µm.

4. The process according to any one of the preceding claims, wherein said lime slurry provided in step (a) comprises distiller waste resulting from the ammonia regeneration step in a process for producing soda ash according to the Solvay process.

5. The process according to any one of the preceding claims, wherein said lime powder and lime pieces are by-products from a process for producing soda according to the Solvay process such as: lime powder recovered from de-dusting during lime grinding, or lime pieces taken out from lime grinding before production of milk of lime.

6. The process according to any one of the preceding claims, wherein step (b) comprises washing the lime slurry with water.

7. The process according to claim 4, wherein the salt-depleted lime slurry obtained in step (a) has a solid content from 20 to 50 wt-%.

8. The process of any one of the preceding claims, wherein the lime powder has a particle size distribution **characterized by** a d₅₀ value of from 0.01 mm to 0.05 mm, and/or the lime pellets have a particle size distribution **characterized by** a d₅₀ value of from 0.2 to 5 mm.

9. The process of any one of the preceding claims, wherein the wet granulate obtained in step (d) has a moisture content of at least 12 wt.-%; and/or wherein the wet granulate obtained in step (d) has a moisture content of at most 40 wt.-%, preferably at most 30 wt.-%, more preferably at most 25 wt.-%.

10. The process of any one of the preceding claims, wherein the dry granulate obtained in step (e) has a moisture content of from 1 to 10 wt.-%; and/or wherein the dry granulate obtained in step (e) has a particle size distribution **characterized by** a d₅₀ value of from 1 to 3 mm.

11. A lime fertilizer obtainable by a process of any one of the preceding claims comprising at least 15 wt-%, preferably at least 20 wt-%, more preferably at least 25 wt-%, even more preferably at least 30 wt-% of lime expressed as Ca(OH)₂.

12. The lime fertilizer of claim 11, comprising a granulate as defined in any one of claims 1 to 12.

13. The lime fertilizer of claim 11 or 12, wherein said granulate is the dry granulate.

14. The use of a lime slurry comprising calcium chloride, a lime powder and lime pellets for preparing a lime fertilizer.

15. The use of claim 14, wherein said lime slurry comprising calcium chloride, lime powder and lime pellets are obtained from a process for producing soda ash according to the Solvay process.
